Europäisches Patentamt

European Patent Office

Office européen des brevets

(11) Publication number: **0 459 368 A2**

# EUROPEAN PATENT APPLICATION

(21) Application number: **91108631.2**

(22) Date of filing: **28.05.91**

(51) Int. Cl.5: **G11B 23/037, G11B 23/087**

(30) Priority: **29.05.90 KR 737590**

(43) Date of publication of application:
**04.12.91 Bulletin 91/49**

(84) Designated Contracting States:
**DE FR GB**

(71) Applicant: **GOLDSTAR CO. LTD.**
**20, Yoido-Dong Yongdungpo-Ku**
**Seoul(KR)**

(72) Inventor: **Kim, In Joong**
**45, Seocho-Dong Samho Apartment 1-303**
**Seocho-Ku, Seoul(KR)**

(74) Representative: **Türk, Gille, Hrabal**
**Brucknerstrasse 20**
**W-4000 Düsseldorf 13(DE)**

(54) **Tape reel capable of preventing the tape from being damaged.**

(57) A tape reel comprising an upper flange and a lower flange having a hub body, the hub body comprising an inner hub, a middle hub and an outer hub, the three hubs arranged vertically and spaced apart from one another and each having a predetermined thinness capable of securing a smooth flow and balanced density distribution of materials during injection molding procedure, two vertical spaces, a vertical inner space provided between the inner and middle hubs and a vertical outer space between the middle and outer hubs, and providing a predetermined thickness in combination with the three hubs for the hub body, and a plurality of inner and outer ribs, the inner ribs spaced apart from one another and provided between the inner and middle hubs and the outer ribs spaced apart from one another and between the middle and outer hubs, and the inner and outer ribs extending top portion of the hub body to lower portion of the hub body and adapted for connecting the hubs, respectively. The present invention provides advantages of making the tape wound around the hub be finely prevented from being damaged and also improving the productivity because of preventing the tape reel from being poorly manufactured.

FIG.2

BACKGROUND OF THE INVENTION

The present invention relates to a tape reel of a video tape cassette, and more particularly to a tape reel having upper and lower flanges arranged in parallel with each other and regularly formed outer side surface of a hub of the lower flange so that the tape wound around the hub can be finely protected, thereby preventing the tape from being damaged.

Generally, a tape reel comprises, as shown in FIGs. 5A to 5C, a lower flange 21 made of synthetic resin and provided with a cylindrical hub 22, said hub 22 provided with a downwardly opened cylindrical slot and having a center fixing protrusion 23 formed on the top portion of the hub 22 and a plurality of small protrusions 24 circumferentially arranged centering around the center fixing protrusion 23 and spaced apart from one another. In addition, there has been provided an upper flange 25 made of synthetic resin and fixed onto the lower flange, said upper flange 25 having a center fixing hole 26 and a plurality of small holes 27 circumferentially arranged centering around the center fixing hole 25 and spaced apart from one another, and each adapted for receiving corresponding protrusions 23 and 24.

Here, in case of a tape reel provided with a hub having a relatively thick side wall than that of ordinary type of tape reel, the upper flange thereof could be fixed on the hub so that it might be in parallel with the lower flange, thereby causing the tape T wound around the hub to be finely protected. However, this type of tape reel has had a disadvantage that it could not accommodate required quantity of tape.

Other drawback occurred when a tape reel has a hub formed as thickened inwardly occupying the space of the downwardly opened cylindrical slot in order to have a relatively thick wall and accommodate required quantity of tape. This tape reel having the hub inwardly thickened had a relatively small inner diameter of the downwardly opened cylindrical slot so that there might be a problem of no compatibility.

In assembly of the tape reel, the upper flange 25 could be fixed to the lower flange 21 by the protrusions 23 and 24 of the lower flange 21 in a known thermal-welding method by means of a soldering iron or an ultrasonic welder and the like after seating the upper flange 25 onto the lower flange 21 by inserting the holes 26 and 27 of the upper flange 25 onto said protrusions 23 and 24. Thus, the assembly of the tape reel could be accomplished.

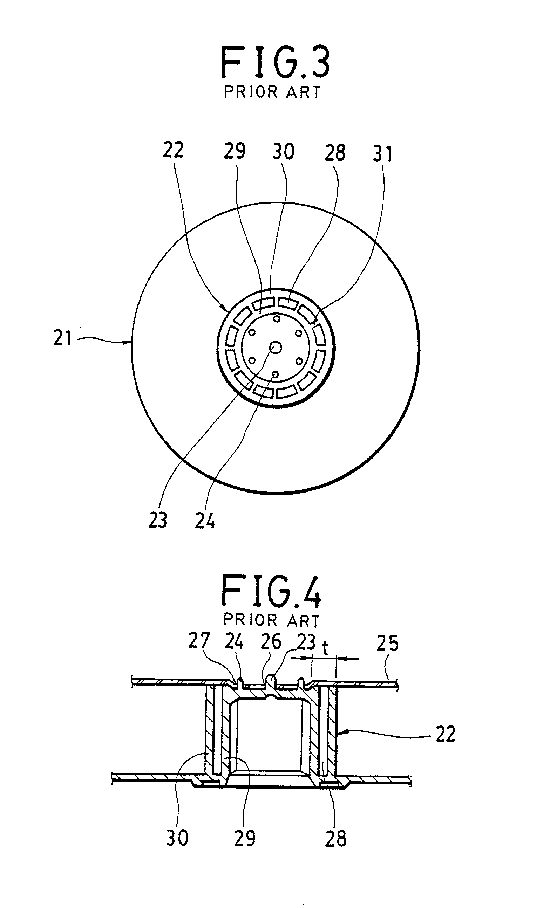

In addition, the known tape reel provided with the hub 22 of the relatively thick side wall might have deformed protrusions 22a at the outer surface of the hub 22, as shown in FIG. 3A, said deformed protrusions 22a caused by shrinkage and cooling deformation of the synthetic resin material. The shrinkage and cooling deformation was due to an unbalanced density distribution of the synthetic resin material caused by relatively thick side wall of the hub 22 during injection molding procedure. The hub 22 having the above-mentioned deformed protrusions 22a made the tape wound around the hub 22 easily be damaged, thereby causing the tape not to play the best of its function.

In an effort of solving the above-mentioned drawback, there has been proposed another known tape reel provided with double hubs, an inner hub 29 and an outer hub 30, providing a middle space therebetween and a predetermined thickness t, as shown in FIGs. 3 and 4. Also, a plurality of ribs 31 are provided between the inner and outer hubs 29 and 30, said ribs 31 extending from the top of the hubs to the bottom of the hubs and adapted for connecting the inner hub 29 to the outer hub 30.

In the drawings, the same reference numerals as those of FIG. 5A which designate the same elements.

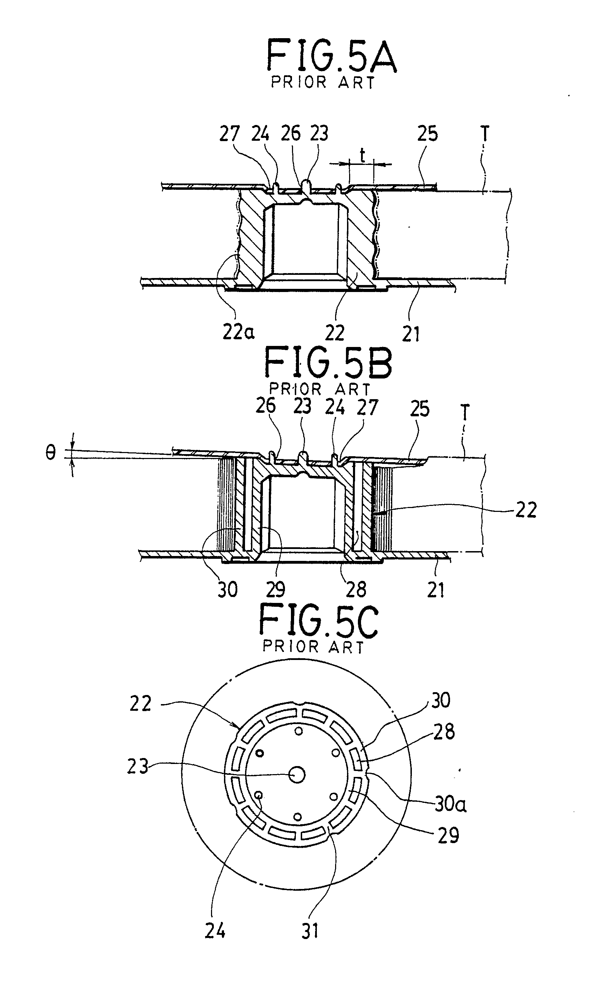

However, the inner and outer hubs 29 and 30 of this type of tape reel had a relatively thick side wall as before so that the tape reel might have depressed shrinkage portions 30a each formed at the outer surface of the outer hub 30 near each rib 31, as shown in FIG. 5A. It was known that the depressed shrinkage portions 30a was due to disturbed flow and unbalanced density distribution of the synthetic resin material during the injection molding. Thus, the tape T wound around the outer hub 30 might be damaged. Furthermore, in this type of tape reel, the hubs 20 and 30 might be deformed so that a part of the top portion thereof might shrink lengthwise, thereby introducing a problem of assembling the upper and lower flanges 25 and 21 in order to be inclined with each other at an inclination angle $\theta$, as shown in FIG. 5B. Hence, it has been noted that there was a disadvantage that the inclined upper flange 25 of this type of tape reel contacted with the upper periphery of the tape wound around the outer hub 30 so that the upper periphery of the tape might be damaged.

SUMMARY OF THE INVENTION

It is, therefore, an object of the present invention to provide a tape reel provided with a hub securing a predetermined thickness t in order to provide a parallelism between upper and lower flange and a thinness in order to provide a balanced density distribution during injection molding procedure, thereby causing the hub to have a smooth outer surface without any deformed protrusions and depressed shrinkage portions, and the tape wound around the outer surface of the hub not to be damaged.

In accordance with the present invention, the above-mentioned object can be accomplished by providing a tape reel comprising an upper flange and a lower flange having a hub body, said hub body comprising: an inner hub, a middle hub and an outer hub, said three hubs arranged vertically and spaced apart from one another and each having a predetermined thinness capable of securing a smooth flow and balanced density distribution of materials during injection molding procedure; two vertical spaces, a vertical inner space provided between said inner and middle hubs and a vertical outer space between said middle and outer hubs, and providing a predetermined thickness t in combination with said three hubs for said hub body, and a plurality of inner and outer ribs, said inner ribs spaced apart from one another and provided between said inner and middle hubs and said outer ribs spaced apart from one another and between said middle and outer hubs, and said inner and outer ribs extending top portion of said hub body to lower portion of said hub body and adapted for connecting said hubs, respectively.

## BRIEF DESCRIPTION OF THE DRAWINGS

The above and other objects, features and other advantages of the present invention will be more clearly understood from the following detailed description taken in conjunction with the accompanying drawings, in which:

FIG. 1 is a plane view of a lower flange of a tape reel in accordance with the present invention;

FIG. 2 is a cross sectional view of a tape reel in accordance with the present invention after assembly;

FIG. 3 is a view corresponding to FIG. 1, but showing a prior art;

FIG. 4 is a view corresponding to FIG. 2, but showing an embodiment in accordance with the prior art;

FIG. 5A is a view corresponding to FIG. 2, but showing another embodiment in accordance with the prior art and having deformed protrusions at outer surface of hub;

FIG. 5B is a view corresponding to FIG. 4, but showing the upper flange fixed in inclination on the lower flange; and

FIG. 5C is a view corresponding to FIG. 3, but showing a hub having depressed shrinkage portions at outer surface thereof.

## DETAILED DESCRIPTION OF THE PREFERRED EMBODIMENTS

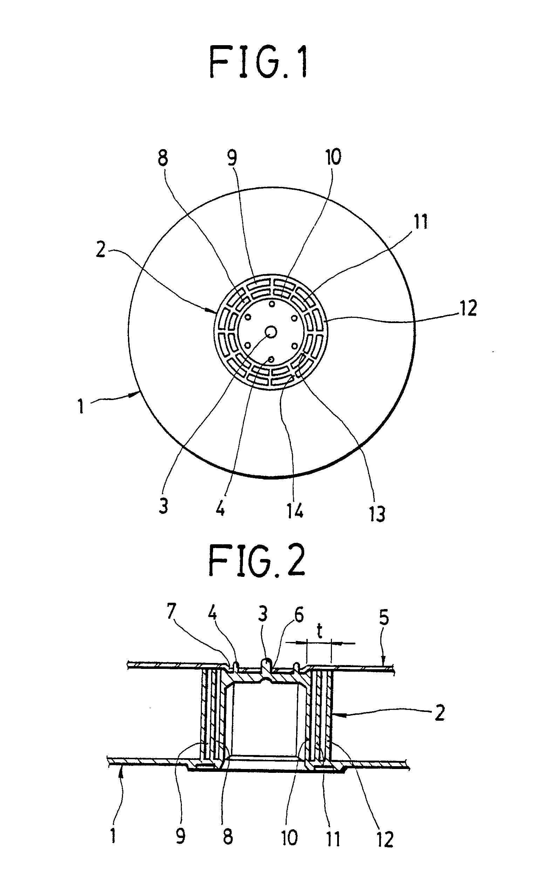

Turning now to FIGS. 1 and 2 which are a plane view of a lower flange of a tape reel in accordance with the present invention and a cross sectional view of a tape reel in accordance with the present invention after assembly, respectively, this tape reel generally comprises a lower flange 1 made of synthetic resin and provided at the center portion thereof with a cylindrical hub body 2, said hub body 2 having a predetermined thickness t and provided with a downwardly opened cylindrical slot and having a center fixing protrusion 3 formed on a top of said hub body 2 and a plurality of small protrusions 4 circumferentially arranged centering around said center fixing protrusion 3 and spaced apart from one another. There has been generally provided an upper flange 5 made of synthetic resin and fixed onto the lower flange 1, said upper flange 5 having a center fixed hole 6 and a plurality of small holes 7 circumferentially arranged centering around said center fixed hole 6 and spaced apart from one another, and each adapted for receiving corresponding protrusions 3 and 4. Here, the hub body 2 comprises an inner hub 10, a middle hub 11 and an outer hub 12 in order to provide two vertical spaces, a vertical inner space 8 arranged between said inner and middle hubs 10 and 11 and a vertical outer space 9 between said middle and outer hubs 11 and 12. The inner and outer vertical spaces 8 and 9 are opened upwardly, respectively, and provides a predetermined thickness t in combination with said three hubs 10, 11 and 12. Also, there is provided a plurality of inner and outer ribs 13 and 14, said inner ribs 13 spaced apart from one another and provided between said inner and middle hubs 10 and 11 and said outer ribs 14 spaced apart from one another and provided between said middle and outer hubs 11 and 12, and said inner and outer ribs 13 and 14 extending top portion of said hub 2 to the lower portion thereof and adapted for connecting said hubs 10, 11 and 12.

In addition, the three hubs 10, 11 and 12 each has a predetermined thinness capable of securing a smooth flow and balanced density distribution of synthetic resin material during injection molding procedure. Hence, the hub 2 can have a smooth outer surface without any deformed protrusions which may be due to shrinkage and cooling deformations of the synthetic resin material and any depressed shrinkage portions which may be shrinkage deformation of the synthetic resin material, thereby causing the tape wound around the outer surface of the hub 2 not to be damaged.

As described above, the tape reel in accordance with the present invention is provided with the hub having the predetermined thickness t and smooth outer surface and comprising three hubs each having the predetermined thinness capable of providing balanced density distribution of the synthetic resin material during the injection molding procedure, and the upper and lower flanges fixed in parallel with each other. Hence, the present invention provides advantages of making the tape wound around the hub be finely prevented from being damaged and also improving the productivity because of preventing the tape reel from being poorly manufactured.

Although the preferred embodiment of the invention have been disclosed for illustrative purpose, those skilled in the art will appreciate that various modifications, additions and substitutions are possible, without departing from the scope and spirit of the invention as disclosed in the accompanying claims.

## Claims

1. A tape reel comprising an upper flange and a lower flange having a hub body, said hub body comprising:

   an inner hub, a middle hub and an outer hub, said three hubs arranged vertically and spaced apart from one another and each having a predetermined thinness capable of securing a smooth flow and balanced density distribution of materials during injection molding procedure;

   two vertical spaces, a vertical inner space provided between said inner and middle hubs and a vertical outer space between said middle and outer hubs, and providing a predetermined thickness in combination with said three hubs for said hub body, and

   a plurality of inner and outer ribs, said inner ribs spaced apart from one another and provided between said inner and middle hubs and said outer ribs spaced apart from one another and between said middle and outer hubs, and said inner and outer ribs extending top portion of said hub body to lower portion of said hub body and adapted for connecting said hubs, respectively.

# FIG.1

# FIG.2

# FIG.3
### PRIOR ART

# FIG.4
### PRIOR ART

## FIG.5A
### PRIOR ART

## FIG.5B
### PRIOR ART

## FIG.5C
### PRIOR ART